## Europäisches Patentamt
## European Patent Office
## Office européen des brevets

(19)

(11) Publication number: **0 000 287**
**B1**

(12)

# EUROPEAN PATENT SPECIFICATION

(45) Date of publication of patent specification: **17.02.82**

(21) Application number: **78300106.8**

(22) Date of filing: **29.06.78**

(51) Int. Cl.³: **B 60 G 15/12,**
**B 60 G 17/04, F 16 F 9/08,**
**F 16 F 9/50**

(54) A hydro-pneumatic spring suspension strut for motor vehicles.

(30) Priority: **30.06.77 HU AU000377**

(43) Date of publication of application:
**10.01.79 Bulletin 79/1**

(45) Publication of the grant of the European patent:
**17.02.82 Bulletin 82/7**

(84) Designated Contracting States:
**BE CH DE FR GB NL SE**

(56) References cited:
**CH - A - 359 984**
**DE - A - 1 480 170**
**DE - B - 1 003 608**
**DE - B - 1 087 466**
**FR - A - 2 038 840**
**FR - A - 2 064 601**
**FR - A - 2 097 305**
**US - A - 3 140 098**
**US - A - 3 178 167**

(73) Proprietor: **AUTóIPARI KUTATó INTéZET**
**Csóka Utca 7-13**
**Budapest XI (HU)**

(73) Proprietor: **Ikarus Karosszéria és Jármügyar**
**Matyásföld Margit Utca 2**
**Budapest XVI (HU)**

(73) Proprietor: **Taurus Gumiipari Vállalat**
**Kerepesi ut 17**
**Budapest VIII (HU)**

(72) Inventor: **Körösladányi, József**
**Csárda utca 9**
**Budapest XII (HU)**
Inventor: **Mádi, Jenö**
**Prodáan utca 1**
**Budapest XVI (HU)**
Inventor: **Szabó, Sándor**
**Györök utca 19**
**Budapest XI (HU)**
Inventor: **Vad, László**
**Berkenye utca 15**
**Visegrád (HU)**
Inventor: **Farkas, Ottó**
**Törökvész ut 27**
**Budapest II (HU)**

(74) Representative: **Gold, Tibor Zoltán et al,**
**T.Z.GOLD & COMPANY 9, Staple Inn**
**London WC1V 7QH (GB)**

Courier Press, Leamington Spa, England.

## A hydro-pneumatic spring suspension strut for motor vehicles

This invention concerns a hydro-pneumatic spring suspension strut for motor vehicles including an air spring and a one-way hydraulic telescopic shock absorber the damping force of which varies according to the load on the strut, i.e. on the motor vehicle.

In one known variant of motor road vehicle suspension the vehicle body is suspended by an air spring mounted between the body and the running wheels with an hydraulic telescopic shock absorber connected in parallel with the air spring. The height of the vehicle body is maintained substantially constant, independently of the load on the vehicle, by interposing a height corrector valve, and as a consequence of the characteristics of the air spring, the natural frequency of the vehicle can be adjusted to a favourably low value.

In the course of relative movement between the vehicle body and the wheels, the hydraulic shock absorber exerts a damping force proportional to the velocity of that relative movement and converts the kinetic energy of the oscillating movements of the vehicle into heat.

Spring strut constructions are already known in which the shock absorber and the air spring are combined into a single or integrated unit, see for instance the hydro-pneumatic spring struts for vehicles disclosed in Patent Specification Nos. 1 152 316 and 1 184 225 of the Federal Republic of Germany. Both of these known constructions disclose a rolling membrane air spring mounted on an hydraulic telescopic shock absorber in such a way that one side (face) of the rolling membrane air spring is fixed to that end of the piston rod of the shock absorber which is connected to the vehicle body, while the other side of the rolling membrane is connected to a base cylinder of the shock absorber linked to the wheels, and in use the membrane can roll along the outer surface of the base cylinder during oscillation of the body. The advantages of the above-mentioned constructions compared with separately mounted air springs and shock absorbers are that these single-unit spring suspension struts require less installation space, their mounting on the vehicle is simpler, that the coincident line of action of the spring and of the damping force does not produce any torque, whereby to simplify the construction, and that the piston rod of the shock absorber is better protected against contamination, which is advantageous from the point of view of its useful life. On the other hand, it is unfavourable that the load on the individual elements of the shock absorber increases and a failure of or a fault developing in the shock absorber can also cause damage to the rolling membrane.

In known single integrated units made up of a shock absorber and an air spring the damping is adjusted to an optimal value for full load. Consequently, at partial load the vehicle is overdamped and this is disadvantageous from the point of view of passenger comfort.

In Swiss patent specification CH - A - 359 984 there is described an air spring separated from a shock absorber that has two working spaces connected by a channel. A regulatable throttling valve is connected in this channel. Regulation of the throttle valve is effected by a piston and cylinder connected to the air spring. Since the air pressure in the air spring is proportional to the load, the damping force exerted by the shock absorber is also proportional to the load.

In German Patent Specification DE - A - 1 480 170 an integrated unit consists of a load-bearing air spring and coil spring and a shock-absorber. The aim of this construction is to achieve load-independent vehicle body height and load-dependent damping. The load-bearing part of the coil spring is formed as a rigid cylinder having two parts separated by a sealing piston. One part constitutes a load-proportional hydraulic chamber containing an hydraulic liquid the volume of which varies to maintain the height of the vehicle constant. This chamber is connected by a valve system to the shock absorber disposed within the inner cylinder of the spring. When the shock absorber is compressed the hydraulic liquid that is displaced is forced into the hydraulic chamber. Thus in this direction of movement the damping force is proportional to the load.

In German Patent Specification DE - B - 1 003 608 there is described a hydro-pneumatic spring suspension strut for vehicles which provides damping proportionally to the load, comprising an hydraulic telescopic shock absorber and a load-bearing pneumatic spring connectable to a source of pressurised gaseous fluid, the gas space of the pneumatic spring being bounded by a resilient wall and a rigid wall and the constructional elements of the shock absorber being in part arranged in the gas space of the pneumatic spring, one of the two relatively movable elements of the shock absorber being connected to an auxiliary membrane that is subjected to the pressure prevailing in the gas space of the pneumatic spring. The auxiliary membrane forms a boundary for the hydraulic liquid and is sealingly connected between the piston rod and the cylinder of the shock absorber and transmits the pneumatic pressure of the air spring to the hydraulic liquid in the shock absorber. In this way, the hydraulic liquid is pressurised to reduce danger of cavitation, but this auxiliary membrane does not materially influence the damping characteristics of the shock absorber.

The last two of the above-mentioned constructions achieve load-proportional damping at the price of a complicated construction involving valves. The risk of faults is high.

The aim of this invention as defined in the appended claims is to overcome, or at least to reduce, the above-described disadvantages of known suspension struts and to provide improved struts wherein the magnitude of the damping force varies with variations in the load on the spring strut, i.e. on the vehicle, without the use of hydraulic control and valves.

The aim of the invention is sought to be achieved by not fixing one of the cylinders or the piston rods of the shock absorber — preferably not fixing the cylinder, to the running gear (wheels) or to the vehicle body— but instead subjecting it to the pressure of the air in the air space of the air spring with the aid of an auxiliary membrane, whereby to load it in the direction of extension so that in its rest position the cylinder (or piston rod) bears against the element the oscillation of which is to be damped, but can also move away from that element.

When the relative velocity of oscillation between the running gear and the vehicle body exceeds the limit velocity at which the damping force which is proportional to the velocity, is equal to the supporting force of the auxiliary membrane — which in turn depends on the internal air pressure — the cylinder moves away from its supported rest position and thereafter the shock absorber will move only at this limit velocity and provide a damping force of a magnitude determined by the auxiliary membrane. On the other hand, when the said relative velocity falls below the limit velocity, the cylinder of the shock absorber will re-assume its supported rest position.

Since usually the air pressure in the air spring changes according to the load on the body, due to the effect of the height corrector valve, the damping force limited by the auxiliary membrane will also be proportional to the load on the spring strut.

Accordingly, the hydro-pneumatic spring suspension strut of this invention is characterised in that the auxiliary membrane is connected between the said one movable element and one of the rigid walls of the strut to urge said one movable element to move relative to said one rigid wall in the direction of extension of the strut whereby to limit the damping proportionally to the load, and abutment means for limiting the movement of said one element.

In a preferred embodiment of this invention both the resilient jacket of the air spring and the auxiliary membrane are constituted as rolling membranes and the piston of the air spring is arranged on a piston column so that it can be rigidly connected to the running gear. The shock absorber cylinder has an end face formed as an abutment surface capable of co-operating with a counter-abutment surface formed in the piston column. The piston rod of the shock absorber is connected to a rigid wall of the air spring, which wall can be fixed to the vehicle body.

In another advantageous embodiment, the piston rod of the shock absorber is fixed to the running gear and one rigid wall of the load-bearing air or gas spring is formed as a piston of the rolling membrane fixed to the wheels, the piston rod of the shock absorber being connected to the piston of the air spring which latter has an auxiliary piston formed as a rigid wall adapted to be secured to the vehicle body. The outer rim of the auxiliary membrane is sealingly fixed to this auxiliary piston, while the counter-abutment is disposed in the above-mentioned rigid wall of the air spring; and there is a guide pin in a guide bush fixed to an end face of the shock absorber cylinder which face serves as a supporting surface and is provided with a resilient bearing plate, the end face of the guide bush serving as the counter-abutment of the above-mentioned bearing plate. Further, a stop plate is arranged on the end of the guide pin projecting beyond the guide bush to limit the extent of resilient extension, and the stop plate carries an abutment or impact damping spring bearing against the end face of the guide bush.

The hydraulic telescopic shock absorber forming part of the spring suspension strut according to the present invention is a so-called one-way shock absorber which is a term of art signifying that its damping force for the same oscillation velocity on extension (in tension) is several times greater than on retraction (in compression). Thus, the load-dependent limitation of the damping force, which in practice is generated only one extension, ensures that the damping of the vehicle remains approximately the same at partial load as at full load. At the same time, the strut also establishes the limits of the movements in extension and in compression. The stroke of the shock absorber forming part of the spring strut is shorter than the total springing path of movement of the spring strut, the difference being equal to or greater than the amplitude of those oscillations of the wheels on a smooth road surface which are caused by the resilience of the tyres and by any unbalance of the wheels.

In a suitable construction of the shock absorber, its cylinder may be finned or may have a finned cooling head, to improve its cooling.

The invention will now be described in greater detail and by way of example with reference to three preferred embodiments illustrated in the accompanying drawings, in which:

Figure 1 is a longitudinal cross-section through a first embodiment of a spring strut according to the invention, wherein the piston rod of the shock absorber is fixed to the upper casing of an air spring;

Figure 2 is a longitudinal cross-section through a second embodiment of a spring strut according to the invention, wherein the piston rod of the shock absorber is fixed into a piston provided in the air spring; and

Figure 3 is a longitudinal cross-section of a third embodiment of a spring strut according to the invention, shown mounted in a motor vehicle.

Like or functionally equivalent parts have been allotted like reference numbers in the drawings.

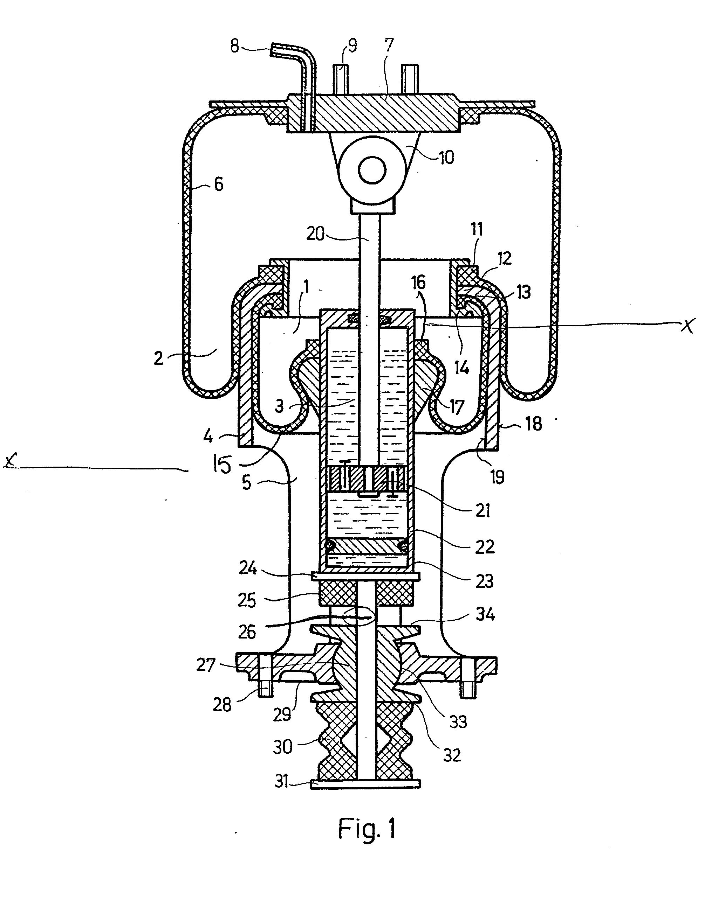

Referring to the embodiment of a spring strut for a motor vehicle shown in Figure 1, the strut 1 consists of three main parts, namely an air spring 2, an hydraulic shock absorber 3 and a support member 5 on which the different elements are supported and mounted; hereafter the member 5 will be referred to as "piston column 5". The air spring 2 of Figure 1 is a rolling membrane type of air spring with a rigid wall portion 7 adapted to be connected to the body of the vehicle, not shown in Figure 1, by way of bolts 9. An air coupling duct 8 extends through the wall 7 and communicates with the internal air space of the air spring 2, the duct 8 being connectable to a source of air in the vehicle.

A membrane 6, also referred to as "the main membrane", is sealingly secured to the wall 7 and during operation it can roll downwardly, as viewed, on the outer surface 18 of a piston 4 mounted on piston column 5. The membrane 6 has an inner rim 11 sealingly fixed to a rim 12 of the piston 4 by means of a locking ring 14. The locking ring 14 also fixes and seals the outer rim 13 of an auxiliary membrane 15 the inner rim 16 of which is fixed to a collar 17 on the outer surface 23 of a cylinder 22 forming part of the shock absorber 3.

In use, the auxiliary membrane 15 can roll on the inner surface 19 of the piston 4 of the air spring 2 as well as on the outer surface 23 of the shock absorber cylinder 22.

The shock absorber 3 is a telescopic, one-way type of shock absorber having an apertured and valved piston 21 connected to one end of a piston rod 20 the other end of which is connected to a block 10 of the wall 7. The magnitude of the forces generated on the piston 21 on extension is a multiple of those in compression, which in practice is considered to be a one-way mode of operation. The cylinder 22 is extended downwardly in the form of a guide pin 26 guided in a guide bush 27, the outer surface of which is part-spherically convex and engages a complementarily concave, part-spherical seat 33 formed in a connecting rim portion 29 of the piston column 5. Planar end faces 32, 34 of the bush 27 serve as supporting and stop faces. The end face 34 is a counter-abutment surface to the bearing rim 24 of the shock-absorber cylinder 22, or more particularly, to a resilient bearing plate 25 disposed on the bearing rim 24. The end face 32 is a counter-abutment surface to an abutment disc 31 serving to limit the extension of the shock absorber. The disc 31 is mounted at the end of the guide pin 26 and is separated from the face 32 by a spring 30 of elastomeric material. The connecting rim 29 has bolts 28 for clamping the strut 1 to the vehicle wheels or to a part moving with the wheels.

The extension of the spring strut 1 is limited by the disc 31 of the shock absorber 3 which means that the springing path of the spring strut 1 is longer than the maximum displacement of the shock absorber 3. The surface area of the auxiliary membrane 15 is chosen to be approximately one-third of the effective surface area of the rolling membrane 6 and its displacement is one-fifth of the total spring path length of the strut 1.

The operation of the spring strut 1 is as follows:

The air spring 2 of the strut 1 is filled with air via the coupling 8 to the required operational pressure by the air system of the vehicle and the height corrector or control valve, not shown in the drawing, whereby to provide a predetermined body height or clearance independently of the load. The air pressure in the air spring 2 is load-dependent and in general is proportional to the load. In normal use, on compression the wall 7 and the air spring piston 4 approach each other, the volume of the air spring 2 is reduced and the rolling membrane 6 rolls down on the outer surface 18 of the piston 4. The pressure in the spring 2 increases with decreasing volume, and the increasing pressure exerts an increasing force on the effective surface of the rolling membrane 6 of the air spring 2. The same air pressure is exerted on the auxiliary membrane 15, thus tending to urge the cylinder 22 of the shock absorber 3 via the plate 25 to the piston column 5, while the damping force of the shock absorber 3 acts in the opposite direction with a magnitude determined by the air pressure. As long as the force on the shock absorber cylinder 22 exerted by the auxiliary membrane 15 is greater than the damping force the resilient bearing plate 25 continues to be held down on and against the piston column 5. As the velocity of oscillation increases a state of dynamic equilibrium is reached in which the force on the shock absorber cylinder 22 transmitted by the auxiliary membrane 15 is equal to the damping force. In this state, the force holding the shock absorber cylinder 22 down against the piston column 5 ceases, and if the oscillation velocity increases further, the movement of the shock absorber cylinder 22 lags or falls behind relative to the piston column 5 and the wheels and the shock absorber cylinder 22 will only come again to rest against the piston column 5 and move together with it when the oscillation velocity falls below the above-mentioned limit value. The movement of the shock absorber cylinder 22 relative to the piston cylinder 5 is made possible by the auxiliary membrane 15 being a rolling membrane so that it can roll on the inner surface 19 of the air spring piston 4 and on the outer surface 23 of the shock absorber cylinder 22.

As a result of the above-described mode of operation, on extension the damping force cannot exceed the value determined by, and proportional to, the air pressure of the auxiliary membrane 15 and the air spring 2. Since the static air pressure is proportional to the load on the spring strut 1, when the latter extends, a load-proportional limitation of the damping force is ensured. The dynamic variation of the air pressure during the oscillations has very little effect on the load-proportional limitation of the damping force because, on the one hand, for the most frequently applied suspensions of motor vehicles, the variation of the pressure of the air in the air springs is only about ± 10% of the static pressure in most practical cases and, on the other hand, the oscillation lags in phase behind the oscillation path. It follows from that that high oscillation velocities occur around the mid-position i.e. the basic operational position, at which the dynamic air pressure is approximately the same as static air pressure. A limitation of the damping force is needed at higher oscillation velocities which is ensured in the above-described way. On extension, i.e. when the wheels move away from the body of the motor vehicle, the force exerted on the body of the motor vehicle by the spring strut 1 is equal to the difference between the spring force of the air spring 2 and the load-proportionally limited damping force of the shock absorber 3.

The extension of the spring strut 1 is reliably limited by the fact that the stroke of the shock absorber 3 is shorter than the path length of springing movement of the spring strut 1 and in a fully extended position first the piston 21 of the shock absorber cylinder 22 mechanically abuts the end of the cylinder and the guide pin 26 is displaced in the bush 27, which compresses the elastomeric spring 30 and then abuts the stop disc 31.

Thus the simple construction of the spring strut according to Figure 1 of the present invention makes load-proportional control of the damping force possible, while requiring relatively little space because the air spring and the shock absorber are integrated into a single unit; moreover, the piston rod of the shock absorber operates in a clean and practically uncontaminatable environment, and no torque is generated between the two suspension elements 2, 3 because the air spring 2 and the shock absorber 3 are mounted concentrically.

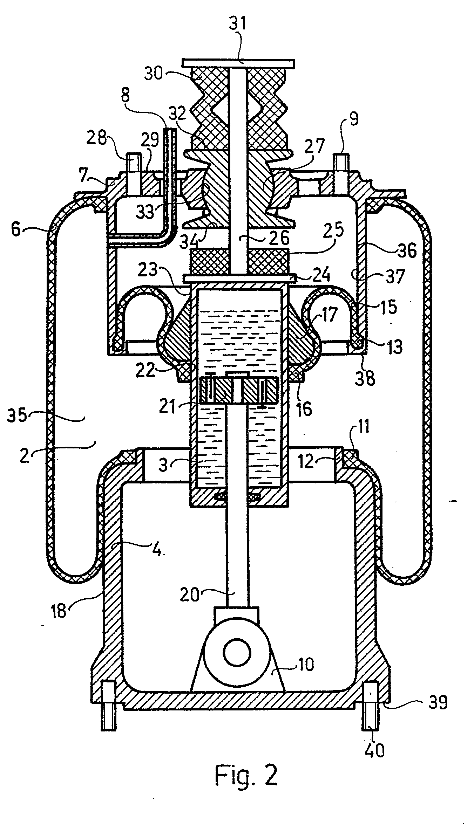

The embodiment shown in Figure 2 differs from that of Figure 1 mainly in that it is the cylinder 22 of the shock absorber 3 mounted in a spring strut generally designated by 35 that is fixed to the body of the motor vehicle while the piston rod 20 is fixed, directly or indirectly, to the wheels. An auxiliary piston 36 forming part of a rigid wall 7 is secured to the outer rim 13 of the auxiliary membrane 15 at its rim 38 so that the membrane 15 can roll on the inner surface 37 of the piston 36. The guide pin 26 of the cylinder 22 of the shock absorber 3 is guided in the guide bush 27 mounted in the wall 7.

The air spring piston 4 has a connecting rim 39 by which it can be fixed to the wheels, with the aid of bolts 40.

The mode of operation of the spring strut 35 is essentially the same as that of the spring strut 1 shown in Figure 1. The space requirements of the two struts 1 and 35 are the same. A consideration in choosing between these two spring struts is whether the space requirements of the guide pin 26 and the damping spring 30 are better accommodated in the vehicle body or in the coupling to the wheels.

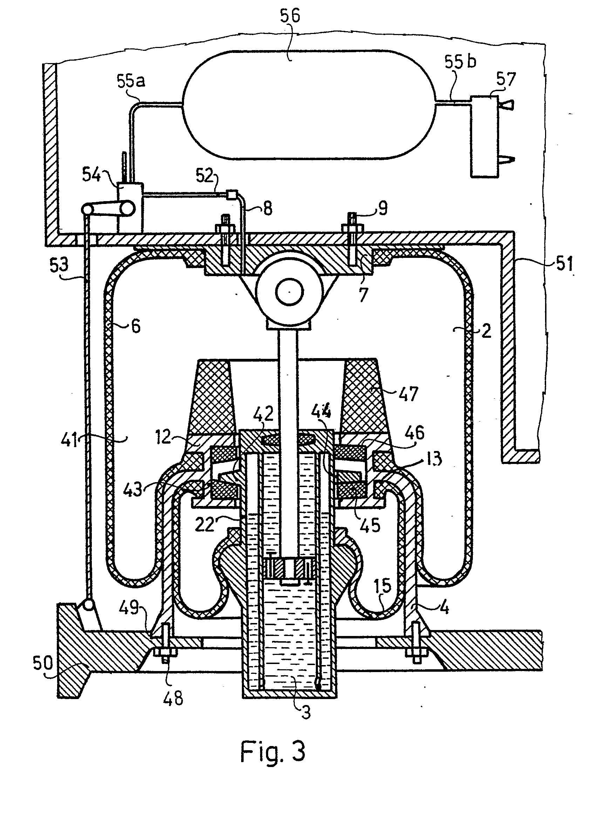

Figure 3 shows a further embodiment of a strut mounted in a vehicle and designated generally by 41. The main advantage of the spring strut 41 shown in Figure 3, as compared with the struts 1 and 35 is its reduced longitudinal dimensions, i.e. its reduced size in the direction of the axis of the shock absorber. The difference is equal to the combined length of the guide pin 26 and the stop disc 31 in Figure 2. The wall 7 is fixed to a body 51 by bolts 9, and a connection rim 49 of the air spring piston 4 is fixed to a bridge body 50 by bolts 48.

The air supply system feeding the air spring consists of a compressor 57, a duct 55*b* connecting the compressor 57 to a tank 56, a duct 55*a* connecting the tank 56 to a height corrector (height level control) valve 54. The pressure coupling 8 of the air spring 2 is connected through a duct 52 to the control valve 54 which is connected to the bridge body 50 by an articulated link 53.

The main difference between the spring strut 41 of Fig. 3 and the spring strut 1 shown in Figure 1 is that there is a stop collar 42 on the cylinder 22 of the shock absorber which is disposed between two resilient support rings 45, 46 for limiting cylinder displacement, and the rings 45, 46 are embedded in a groove 43 in the rim 12 of the air spring piston 4. An elastomeric stop 47 is secured on the air spring piston 4 for limiting the "bounce" of the strut 41. The distance between the two rings 45, 46 is chosen to be equal to or greater than the amplitude of wheel oscillations, on a smooth road surface, due to the resilience of the tyres and any unbalance of the wheels.

There is a gap 44 in the stop collar 42 to provide permanent communication between the upper and lower air spaces of the air spring 2. The operation of the strut 41 is essentially the same as that of the strut 1 shown in Figure 1.

When the vehicle is not in operation the wall 7 and body part 51 are supported by the stop 47. When the engine of the vehicle is started up the air compressor 57 fills the tank 56 with air which then enters the air spring 2 via the height control valve 54 until the level reaches the preset value independently of the load of the vehicle. When the level reaches the preset value, the control valve 54 closes and remains closed within the predetermined spring path length. In this way the pressure in the air spring 2 is proportional to the load and the force exerted on the auxiliary membrane 15 is also proportional to the air pressure. At rest, the stop collar 42 of the cylinder 22 of the shock absorber 3 is supported on the ring 45. In this state the pressure between the upper and lower air spaces of the air spring 2, separated from each other by the stop collar 42, can be equalised through the gap 44. When the body 51 and the bridge 50 move relative to each other, the strut 41 operates in essentially the same way as was described above in connection with Figure 1.

## Claims

1. A hydro-pneumatic spring suspension strut for vehicles which provides damping limited proportionally to the load, comprising an hydraulic one-way shock absorber (3), a load-bearing pneumatic spring (2) connectable to a source of pressurised gaseous fluid and defining a gas space wherein, in the rest position of the strut, the gas pressure is proportional to the static load on the strut, the gas space being bounded in part by a flexible-walled main membrane (6) which is connected to the relatively movable rigid walls (7, 4) for respective connection to the vehicle body (51) and the wheels, a flexible-walled auxiliary membrane (15), the constructional elements of the shock absorber (3) being in part arranged in the gas space of the pneumatic spring (2), the shock absorber (3) having two relatively movable elements (20, 22) one (22) of which is connected to the auxiliary membrane (15) that is subjected to the pressure prevailing in the gas space of the pneumatic spring (2), characterised in that the auxiliary membrane (15) is connected between the said one movable element (22) and one of the rigid walls (4 or 7) of the strut so as to urge said one movable element (22) to move relative to said one rigid wall (4 or 7) in the direction of extension of the strut (1, 35, 41) whereby to limit the damping proportionally to the load, and abutment means (24, 27; 42, 45 and 46) for limiting the movement of said one element (22).

2. A suspension strut according to claim 1, characterised in that an inner rim (16) of the auxiliary membrane (15) is fixed to a cylinder forming said one element (22) of the hydraulic telescopic shock absorber (3) while the outer rim (13) of the auxiliary membrane (15) is fixed to said one rigid wall (4 or 7) and that said abutment means includes a stop (27, 45) fixed to said one rigid wall (4 or 7) bearing the outer rim (13) of the auxiliary membrane (15), while the co-operating counter stop (24; 42) of said abutment means is arranged on the cylinder (22) of the shock absorber (3); and that a piston rod (20) forming the other element of the shock absorber (3) is fixed to the other of said rigid walls (7 or 4) of the pneumatic spring (2).

3. A suspension strut according to claim 1 or claim 2, characterised in that both the main membrane (6) of the pneumatic spring (2) and the auxiliary membrane (15) are formed as rolling membranes, and that the main membrane (6) of the pneumatic spring (2) is connected to a rigid piston like wall (4) which is constituted by said one rigid wall and which is provided with securing elements (28, 29, 40) for securing to the wheels.

4. A suspension strut according to any preceding claim, characterised in that a piston-like rigid wall (4) constituted by said one rigid wall of the pneumatic spring (2) is arranged on a piston column (5) which has fixing elements for connection to the wheels, the end face (24) of the shock absorber cylinder (22) forming one of said stops while the counter-abutment (27) is formed as a supporting surface in the piston column (5), and that the piston rod (20) of the shock absorber (3) is connected to the rigid wall (7) of the pneumatic spring (2) which is connectable to the vehicle body.

5. A suspension strut according to any of claims 1 to 3, characterised in that it has an auxiliary piston (36) which forms a part of said one rigid wall (7) of the pneumatic spring (2) connected to the vehicle body, the outer rim (38) of said auxiliary piston (36) being rigidly and sealingly secured to the auxiliary membrane (15); and that the said counter-abutment (27) is disposed in the said one rigid wall (7) of the pneumatic spring (2) and the piston rod (20) of the shock absorber (3) is connected to the other rigid wall (4) of the pneumatic spring (2).

6. A suspension strut according to any preceding claim, characterised in that a guide pin (26) is fixed to one end face (24) of the cylinder (22) of the shock absorber (3), the said end face (24) being provided with a resilient supporting plate (25), the guide pin (26) being guided in a guide bush (27) an end face (34) of which forms a counter-abutment to said supporting plate (25), and a stop plate (31) for limiting the extension of the strut is mounted on the end of the guide pin (26) projecting beyond the guide bush (27), there being a spring (30) between said stop plate (31) and the end face (34) of the bush (27).

7. A suspension strut according to claim 6, characterised in that the said bush (27) is orientably journalled in a seating (33), co-operating parts of the bush (27) and the seating (33) forming a ball joint.

8. A suspension strut according to claim 1 or claim 2, characterised in that the outer rim (13) of the auxiliary membrane (15) is sealingly fixed to the rim (12) of said one rigid wall (4) of the pneumatic spring (2), the wall (4) journalling resilient abutment rings (45, 46) which sandwich an abutment collar (42) on the shock absorber cylinder (22) to limit the displacement of the latter, a channel (44) being formed in the collar (42) to connect the gas spaces separated by the rim (12) of said one wall (4); and that the piston rod (20) of the shock absorber (3) is connected to the other rigid wall (7) which can be fixed to the vehicle body (51).

9. A suspension strut according to any preceding claim, characterised in that the stroke of the spring strut (1, 35, 41) is longer than that of the shock absorber (3).

## Revendications

1. Elément de suspension à ressort hydropneumatique pour véhicules qui fournit un amortissement proportionellement limité à la charge, du type comprenant un absorbeur de choc hydraulique à une voie (3), un ressort pneumatique (2) portant la charge, ce ressort étant susceptible d'être relié à une source de fluide gazeux sous pression et définissant une chambre à gaz dans laquelle, en position de repos de l'élément, la pression du gaz est proportionnelle à la charge statique s'exerçant sur l'élément, la chambre à gaz étant réunie en partie par une membrane principale à parois souples (6) à des parois rigides (7, 4) mobiles l'une par rapport à l'autre pour la réunion respective au corps de véhicule (51) et aux roues, une membrane auxiliaire à parois souples (15), les éléments de construction de l'absorbeur de choc (3) étant en partie disposés dans la chambre à gaz du ressort pneumatique (2), l'absorbeur de choc (3) ayant deux éléments (20, 22) mobiles l'un par rapport à l'autre dont le premier (22) est réuni à la membrane auxiliaire (15) soumise à la pression prévalant dans la chambre à gaz du ressort pneumatique (2), caractérisé en ce que la membrane auxiliaire (15) est réunie entre ledit premier élément mobile (22) et une première paroi rigide (4 ou 7) de l'élément, de manière à contraindre ledit premier élément mobile (22) à se déplacer par rapport à ladite première paroi rigide (4 ou 7) dans la direction de la dilatation de l'élément (1, 35, 41) de façon à limiter l'amortissement proportionnellement à la charge et des moyens formant butée (24, 27; 42, 45 et 46) limitant le mouvement dudit premier élément (22).

2. Elément de suspension selon la revendication 1, caractérisé en ce qu'un bord interne (16) de la membrane auxiliaire (15) est fixé à un cylindre formant ledit premier élément (22) de l'absorbeur de choc hydraulique téléscopique (3) tandis que le bord externe (13) de la membrance auxiliaire (15) est fixé à la première paroi rigide (4 ou 7), en ce que lesdits moyens formant butée comprennent un organe d'arrêt (27, 45) fixé sur ladite première paroi rigide (4 ou 7) portant le bord externe (13) de la membrane auxiliaire (15), tandis que le contre-organe d'arrêt coopérant (24; 42) desdits desdits moyens formant butée est disposé sur le cylindre (22) de l'absorbeur de choc (3) et en ce qu'une tige (20) de piston formant le second élément de l'absorbeur de choc (3) est fixé sur l'autre desdites parois rigides (7 ou 4) du ressort pneumatique.

3. Elément de suspension selon la revendication 1 ou 2, caractérisé en ce que la membrane principale (6) du ressort pneumatique (2) et la membrane auxiliaire (15) sont toutes deux formées de membranes repliables et en ce que la membrane principale (6) du ressort pneumatique (2) est réunie à une paroi formant piston rigide et qui est pourvue d'éléments de fixation (28, 29, 40) pour fixer les roues.

4. Elément de suspension selon l'une quelconque des revendications précédentes, caractérisé en ce qu'une paroi rigide (4) formant piston constituée par ladite première paroi du ressort pneumatique (2) est fixée sur une colonne de piston (5) munie d'éléments de fixation pour la liaison avec les roues, la face d'extrémité (24) du cylindre de l'absorbeur de choc (22) formant l'une desdites butées, tandis que la contre-butée (27) revêt la forme d'une surface support dans la colonne de piston (5) et en ce que la tige de piston (20) de l'absorbeur de choc (3) est réunie à la paroi rigide (7) du ressort pneumatique (2) reliable au corps du véhicule.

5. Elément de suspension selon l'une quelconque des revendications 1 à 3, caractérisé en ce qu'il comporte un piston auxiliaire (36) qui fait partie de ladite première paroi rigide (7) du ressort pneumatique (2) réuni au corps de véhicule, le bord externe (38) dudit piston auxiliaire (36) étant fixé de manière rigide et étanche à la membrane auxiliaire (15); et en ce que la contre-butée (27), disposée dans ladite première paroi rigide (7) du ressort pneumatique (2), est réunie à la seconde paroi rigide (4) du ressort pneumatique (2).

6. Elément de suspension selon l'une quelconque des revendications précédentes, caractérisé en ce qu'une goupille de guidage (26) est fixée à une face d'extrémité (24) du cylindre (22) de l'absorbeur de choc (3), ladite face d'extrémité (24) étant munie d'une plaque support élastique (25), la goupille de guidage (26) étant guidée dans un manchon de de guidage (27) dont une face d'extrémité (34) forme une contre-butée à l'égard de ladite plaque support (25) et en ce qu'une plaque d'arrêt (31) pour limiter la dilatation de l'élément est montée sur l'extémité de la goupille de guidage (26) se projetant au-delà du manchon de guidage (27), un ressort (30) étant prévu entre ladite plaque d'arrêt (31) et la face d'extrémité (32) du manchon (27).

7. Elément de suspension selon la revendication 6, caractérisé en ce que ledit manchon (27) est tourillonné de manière orientable dans un siège (33), des parties coopefantes du manchon (27) et le siège (33) formant un joint à rotule.

8. Elément de suspension selon la revendication 1 ou 2, caractérisé en ce que le bord externe (13) de la membrane auxiliaire (15) est fixé de manière étanche au bord (12) de ladite première paroi rigide (4) du ressort pneumatique (2), la paroi (4) tourillonnant des bagues de butée élastiques (45, 46) qui comprennent entre elles un collier de butée (42) sur le cylindre de l'absorbeur de choc (22) pour limiter le déplacement de ce dernier, un canal (44) étant formé dansle collier (42) pour réunir les chambres à gaz séparées par le bord (2) de ladite première paroi (4); et ladite tige de piston (20) de l'absorbeur de choc (3) est réunie à la seconde paroi rigide (7) qui peut être fixée au corps de véhicule (51).

9. Elément de suspension selon l'une quelconque des revendications précédentes, caractérisé en ce que la course de l'élément de suspension (1, 35, 41) est plus longue que celle de l'absorbeur de choc (3).

## Patentansprüche

1. Hydro-pneumatisches Federbein für Fahrzeuge mit einer proportional zur Belastung begrenzten Dämpfung, mit einem hydraulischen Einweg-Stossdämpfer (3), einer die Last tragenden pneumatischen Feder (2), die an einen ein unter Druck stehendes gasförmiges Medium liefernden Energieerzeuger anschliessbar ist und die einen Gasraum aufweist, in welchem in der Ruhelage des Federbeins ein zur statischen Belastung des Federbeins proportionaler Gasdruck vorhanden ist, und welcher Gasraum zu einem Teil von einer flexiblen Hauptmembran (6) umschlossen ist, die an relativ zueinander beweglichen und für die Verbindung mit einem Fahrzeug-Chassis (51) bzw. mit den Rädern dienenden steifen Wänden (4, 7) befestigt ist, und mit einer Hilfsmembran (15), wobei der Stossdämpfer (3) sich zu einem Teil in den Gasraum der pneumatischen Feder (2) erstreckt und zwei relativ zueinander bewegliche Elemente (20, 22) aufweist, von denen das eine (22) mit der Hilfsmembran (15) verbunden ist, die dem in dem Gasraum der pneumatischen Feder (2) herrschenden Druck ausgesetzt ist, dadurch gekennzeichnet, dass die Hilfsmembrane (15) als Verbindung zwischen dem genannten einen Element (22) des Stossdämpfers und einer der steifen Wände (4 oder 7) derart angeordnet ist, dass sie das genannte eine bewegliche Element (22) drängt, sich relativ zu der genannten einen steifen Wand (4 oder 7) in der zu einer Verlängerung des Federbeins (1, 35, 41) führenden Richtung zu bewegen und dadurch die Dämpfung proportional zur Last zu begrenzen, und dass Anschlagmittel (24, 27; 42, 45, 46) für die Begrenzung der Bewegung des genannten einen beweglichen Elementes (22) vorhanden sind.

2. Federbein nach Anspruch 1, dadurch gekennzeichnet, dass ein innerer Rand (16) der Hilfsmembran (15) an einem Zylinder (22) befestigt ist, welcher das genannte eine Element (22) des hydraulischen Stossdämpfers (3) bildet, und ein äusserer Rand (13) der Hilfsmembran (15) an der genannten einen steifen Wand (4 oder 7) befestigt ist und dass die Anschlagmittel einen mit der einen steifen Wand (4 oder 7), an welcher die Hilfsmembran mit dem äusseren Rand (13) befestigt ist, in fester Verbindung stehenden Anschlag (27, 25) aufweisen und ein mit diesem zusammenwirkender Gegenanschlag (24, 42) der Anschlagmittel am Zylinder (22) des Stossdämpfers (3) befestigt ist, und dass eine das andere bewegliche Element des Stossdämpfers (3) bildende Kolbenstange (20) an der anderen der vorgenannten steifen Wände (4 oder 7) der pneumatischen Feder (2) befestigt ist.

3. Federbein nach Anspruch 1 oder 2, dadurch gekennzeichnet, dass die Hauptmembrane (6) und die Hilfsmembrane (15) der pneumatischen Feder (2) als Rollmembranen ausgebildet sind und dass die Hauptmembrane (6) an einer kolbenartigen Wand (4) befestigt ist, welche die eine steife Wand darstellt und welche Befestigungsorgane (28, 29, 40) für die Befestigung an einem Fahrzeugrad aufweist.

4. Federbein nach einem der Ansprüche 1 bis 3, dadurch gekennzeichnet, dass die die eine steife Wand der pneumatischen Feder (2) bildende kolbenartige Wand (4) an einer Säule (5) angeordnet ist, welche Befestigungsorgane (28, 29, 40) für die Fahrzeugrad-Befestigung aufweist, dass die Stirnwand (24) des Stossdämpfer-Zylinders (22) einen der Anschläge bildet und der Gegenanschlag (27) als eine Stützfläche in der Säule (5) ausgebildet ist, und dass die Kolbenstange (20) des Stossdämpfers (3) an der zur Befestigung an einem Fahrzeug-Chassis dienenden steifen Wand (7) der pneumatischen Feder (2) befestigt ist.

5. Federbein nach einem der Ansprüche 1 bis 3, dadurch gekennzeichnet, dass ein Teil der zur Befestigung an einem Fahrzeug-Chassis dienenden, steifen Wand (7) der pneumatischen Feder (2) als Hilfskolben (36) ausgebildet ist, dessen freier äusserer Rand (38) mit der Hilfsmembrane (15) fest und luftdicht verbunden ist, und dass der Gegenanschlag (27) in der genannten einen steifen Wand (7) der pneumatischen Feder (2) angeordnet ist und die Kolbenstange (20) des Stossdämpfers (3) an der anderen steifen Wand (4) der pneumatischen Feder (2) befestigt ist. (Fig. 2)

6. Federbein nach einem der Ansprüche 1 bis 5, dadurch gekennzeichnet, dass ein Führungsbolzen (26) an der einen Stirnwand (24) des Zylinders (22) des Stossdämpfers (3) befestigt ist und die Stirnwand (24) eine Stützscheibe (25) aus nachgiebigem Material trägt, dass der Führungsbolzen (26) in einer Führungsbuchse (27) geführt ist, deren Stirnfläche (34) einen Gegenanschlag für die Stützscheibe (25) bildet, und dass eine Anschlagscheibe (31) für die Begrenzung der Längenänderung des Federbeins im Sinne einer Verlängerung am Ende des Führungsbolzens (26), welches über die Führungsbuchse (27) hinaus vorsteht, befestigt ist und zwischen der Führungsbuchse (27) und der Anschlagscheibe (31) eine Feder (30) angeordnet ist.

7. Federbein nach Anspruch 6, dadurch gekennzeichnet, dass die Führungsbuchse (27) in einer Lagerung (33) gehalten ist, bei der die zusammen wirkenden Teile der Lagerung und der Führungsbuchse eine Kugelgelenk-Verbindung bilden.

8. Federbein nach Anspruch 1 oder 2, dadurch gekennzeichnet, dass der äussere Rand (13) der Hilfsmembrane (15) abgedichtet an dem Rand (12) der genannten einen steifen Wand (4) der pneumatischen Feder (2) befestigt ist, wobei die Wand (4) die Lagerung für an dieser gehaltene Anschlagringe (45, 46) aus nachgiebigem Material bildet, zwischen welche im Abstand von einander angeordnete Anschla-gringe (45, 46) ein am Stossdämpfer-Zylinder (22) aussen angeordneter Ringflansch (42) hineinragt, der im Zusammenwirken mit den Anschlagringen die Bewegung des Zylinders begrenzt, wobei eine durch den Ringflansch (42) sich hindurcherstreckende Verbindungsbohrung (44) die durch den Rand (12) der genannten Wand (4) von einander getrennten Gasräume verbindet, und dass die Kolbenstange (20) des Stossdämpfers (3) mit der anderen steifen Wand (7) der pneumatischen Feder (2) verbunden ist, welche zur Befestigung am Fahrzeug-Chassis bestimmt ist.

9. Federbein nach einem der Ansprüche 1 bis 8, dadurch gekennzeichnet, dass der Hub des Federbeins (1, 35, 41) länger als der Hub des Stossdämpfers (3) ist.

Fig. 1

Fig. 2

Fig. 3